# EUROPÄISCHE PATENTSCHRIFT

(11) **EP 4 259 558 B1**
(45) Veröffentlichungstag und Bekanntmachung des Hinweises auf die Patenterteilung: **05.06.2024**
(21) Anmeldenummer: 22722805.3
(22) Anmeldetag: 14.04.2022
(51) Int. Cl.: B65G 53/10, B65G 69/18, G01F 22/00

(54) **VORRICHTUNG ZUM BEFÜLLEN EINES BEHÄLTERS MIT SCHÜTTGUT**
APPARATUS FOR FILLING A CONTAINER WITH BULK MATERIAL
DISPOSITIF POUR REMPLIR UN RÉCIPIENT AVEC UN PRODUIT EN VRAC

(30) Priorität: 19.04.2021 AT 502872021
(43) Veröffentlichungstag der Anmeldung: 18.10.2023
(73) Patentinhaber: Nowe GmbH, 31008 Elze (DE)
(72) Erfinder: BARTLING, Werner, 31008 Elze (DE); REICH, Alexander, 40670 Meerbusch (DE); WEISS, Ralf, 31029 Banteln (DE)
(74) Vertreter: SONN Patentanwälte GmbH & Co KG
(86) Internationale Anmeldenummer: PCT/EP2022/059992
(87) Internationale Veröffentlichungsnummer: WO 2022/223423

(56) Entgegenhaltungen:
- AT-A4- 522 142
- DE-A1-102017 118 867
- DE-U1- 9 006 250
- US-A- 3 881 610
- US-A- 4 225 033

## Beschreibung

Die Erfindung betrifft eine Vorrichtung zum Befüllen eines Behälters mit Sand zur Verwendung für Besandungssysteme zur Unterstützung der Brems- und Antriebstechnik von Schienenfahrzeugen, mit einem Vorratsbehälter für den Sand mit einem verschließbaren Deckel und einem Auslass, einer unter dem Vorratsbehälter angeordneten Dosiereinrichtung, einer pneumatischen Fördereinrichtung zum Fördern des Sandes mit Hilfe von Druckluft in den zu befüllenden Behälter über einen Förderschlauch mit einer Ausblaslanze am freien Ende, wobei eine Steuereinrichtung zur Steuerung des Befüllvorgangs vorgesehen ist, und an der Ausblaslanze eine Absaugdüse angeordnet ist, wobei die Absaugdüse über einen Absaugschlauch mit einer Absaug- und Entstaubungseinrichtung mit einem Filter und einem Staubsammelbehälter verbunden ist.

Die vorliegende Erfindung bezieht sich auf eine Vorrichtung zum Befüllen eines Sandbehälters, wie er bei schienengebundenen und angetriebenen Fahrzeugen bei Besandungssystemen zur Unterstützung der Brems- und Antriebstechnik Anwendung findet. Die Sandbehälter in Schienenfahrzeugen werden üblicherweise händisch oder halbautomatisch mit dem Streusand befüllt. Abgesehen davon, dass die Befüllung der Sandbehälter sehr zeitaufwendig und körperlich belastend ist, kommt es häufig auch zu erheblicher Staubentwicklung, wodurch die Gesundheit des Personals gefährdet wird bzw. Schutzmaßnahmen erforderlich sind.

Beispielsweise beschreibt die AT 522 142 B1 eine gattungsbildende Befüllvorrichtung der gegenständlichen Art. Über einen in der Fördereinrichtung angeordneten Drucksensor, welcher mit der Steuereinrichtung verbunden ist, kann ein Gegendruck erfasst werden, der sich einstellt, wenn der zu befüllende Behälter die Befüllgrenze erreicht. Dadurch kann eine automatische Abschaltung der Förderung des Sandes eingeleitet werden. Der Gegendruck, der beispielsweise im Bereich von einigen Millibar liegt, stellt allerdings keine zuverlässige Möglichkeit zur automatischen Steuerung des Befüllvorgangs dar.

Aus der US 2006/174971 A1 ist eine Befüllvorrichtung für einen Flüssigkeitsbehälter bekannt geworden, wobei an der Ausgabepistole Lichtleiter einer elektrooptischen Entfernungsmesseinrichtung angeordnet sind, um den Flüssigkeitsstand während des Befüllens messen zu können.

Die DE 10 2017 118 867 A1 betrifft einen Verladekopf für das Verladen von Schüttgütern in Güterwagen, der sich vom Gegenstand der vorliegenden Erfindung unterscheidet.

Die DE 9006250 U1 betrifft einen Füllstutzen mit Verteileinrichtung für Schüttgüter, wobei beim Befüllvorgang eine Absaugung der Luft in einem Ringraum zwischen Füllrohr und Außenbalg durch einen Absaugstutzen erwähnt wird.

Die US 3,881,610 A und US 4,225,033 A beschreiben allgemein Befüllvorrichtungen für Schüttgüter mit Vorkehrungen gegen eine Staubentwicklung.

Die Aufgabe der vorliegenden Erfindung besteht daher in der Schaffung einer oben genannten Befüllvorrichtung, welche eine zuverlässige automatische Abschaltung des Befüllvorgangs ermöglicht und das Risiko einer Überfüllung und eines Austritts von Sand und Staub während des Befüllvorgangs reduziert. Nachteile bekannter Befüllvorrichtungen sollen vermieden oder zumindest reduziert werden.

Gelöst wird die erfindungsgemäße Aufgabe durch eine Befüllvorrichtung nach Anspruch 1, bei der eine mit der Steuereinrichtung verbundene elektrooptische Entfernungsmesseinrichtung mit einem Lichtleiter zur Messung des Füllstands des Sandes im Behälter während des Befüllvorgangs vorgesehen ist, weiters die Steuereinrichtung mit einer Messeinrichtung zur Erfassung des Füllstands des Sandes im Behälter und mit einem Sensor im Vorratsbehälter zur Erfassung des Füllstands des Sandes im Vorratsbehälter verbunden ist, welche Messeinrichtung und welcher Sensor mit einer übergeordneten Zentrale verbunden ist, und die Absaugdüse koaxial um die Ausblaslanze angeordnet ist, wobei das freie Ende des Lichtleiters der elektrooptischen Entfernungsmesseinrichtung im Bereich der Ausblaslanze an der Absaugdüse angeordnet ist. Eine elektrooptische Entfernungsmesseinrichtung dient zur Messung einer Distanz über die Laufzeitmessung eines zeitlich kurzen Lichtimpulses, der über einen Lichtleiter ausgesendet, an einem Ziel reflektiert und wieder vom selben Lichtleiter empfangen wird. Üblicherweise wird ein Laserimpuls als Lichtsignal verwendet. Die elektrooptische Entfernunsgsmesseinrichtung kann an einer beliebigen Stelle der Befüllvorrichtung angeordnet werden und ist mit dem Lichtleiter verbunden, dessen freies Ende im Bereich der Ausblaslanze angeordnet ist. Dadurch wird ermöglicht, dass der Füllstand des Sandes im zu befüllenden Behälter während des Befüllvorgangs gemessen werden kann. Da die Ausblaslanze am Ende des Förderschlauchs in die Befüllöffnung des Behälters ragt, weist auch das freie Ende des Lichtleiters, über das die Lichtimpulse zur Entfernungsmessung ausgesendet und wieder empfangen werden, ebenfalls in den Behälter hinein. Dadurch wird eine zuverlässige Erfassung des Befüllzustands im Behälter gewährleistet und eine rechtzeitige Deaktivierung der Förderung des Sandes sichergestellt. Gegenüber einer Messung des Gegendrucks ist eine solche optische Messung direkt im zu befüllenden Behälter genauer und sicherer. Erfindungsgemäß wird also eine rechtzeitige Beendigung des Befüllvorgangs erzielt und ein unerwünschter Austritt von Sand am Ende des Befüllvorgangs vermieden. Dadurch, dass die Steuereinrichtung mit einer Messeinrichtung zur Erfassung des Füllstands des Sandes im Behälter verbunden ist, und die Messeinrichtung mit einer übergeordneten Zentrale verbunden ist, kann der Befüllvorrichtung über die übergeordnete Zentrale mitgeteilt werden, wenn Bedarf an einer Befüllung besteht. Dadurch, dass im Vorratsbehälter ein Sensor zur Erfassung des Füllstands des Sandes im Vorratsbehälter vorgesehen und mit der Steuereinrichtung verbunden ist, kann auch rechtzeitig auf eine notwendige Nachfüllung des Vorratsbehälters hingewiesen werden. Auch kann über den Füllstand im Vorratsbehälter sichergestellt werden, ob sich eine Befüllung eines Behälters mit Sand mit der vorhandenen Menge an Sand überhaupt ausgehen wird. Der Sensor kann beispielsweise in Form eines kapazitiven Sensors realisiert sein. Auch andere Arten von Sensoren, zum Beispiel Sensoren, welche das Gewicht des Vorratsbehälters messen oder Ultraschallsensoren oder optische Sensoren, welche den Füllstand berührungslos messen, sind ebenfalls denkbar. Dadurch, dass an der Ausblaslanze eine Absaugdüse angeordnet ist, kann allenfalls entstehender Staub während des Befüllvorgangs abgesaugt werden und ein Austritt in die Atmosphäre verhindert werden. Dadurch ist es nicht notwendig, dass das Bedienungspersonal Schutzvorrichtungen, wie zum Beispiel Atemmasken, verwenden muss. Die Absaugdüse ist vorzugsweise in Längsrichtung der Ausblaslanze verschiebbar und fixierbar angeordnet. Dadurch kann eine optimale Positionierung der Absaugdüse und somit eine optimale Stauberfassung bzw. Staubabsaugung vorgenommen werden. Die Absaugdüse ist koaxial um die Ausblaslanze angeordnet, wobei das freie Ende des Lichtleiters der elektrooptischen Entfernungsmesseinrichtung an der Absaugdüse angeordnet ist. Die Absaugdüse ist über einen Absaugschlauch mit einer Absaug- und Entstaubungseinrichtung verbunden. In der Entstaubungseinrichtung wird der allenfalls erfasste und abgezogene Staub in entsprechenden Sammelbehältern gesammelt und kann auf diese Weise einfach und sicher entsorgt werden. Da es sich bei Staub von Streusand meist um atemfähigen Staub handelt, ist dieser Abfall als Gefahrengut zu behandeln und muss entsprechend entsorgt werden. Die elektrooptische Entfernungsmesseinrichtung ist relativ kostengünstig realisierbar und darüber hinaus unempfindlich gegenüber elektromagnetischen Störungen. Wenn bestimmte Füllstände erreicht sind, kann beispielsweise eine optische oder akustische Ausgabe bestimmter Signale erfolgen, um dem Bedienungspersonal der Befüllvorrichtung den aktuellen Befüllstand mitzuteilen. Die Steuereinrichtung zur Steuerung des Befüllvorgangs ist vorzugsweise durch einen Mikroprozessor oder Mikrocontroller gebildet, der von einer entsprechenden Spannungsversorgung mit elektrischer Energie versorgt wird. Die Steuereinrichtung ist mit Bedienelementen oder einer Benutzerschnittstelle verbunden, um verschiedene Einstellungen zu ermöglichen.

Wenn der Lichtleiter der elektrooptischen Entfernungsmesseinrichtung in einem Schutzschlauch angeordnet ist, kann eine Beschädigung desselben verhindert werden. Der im Schutzschlauch befindliche Lichtleiter kann in geeigneter Weise vom Bereich der Ausblaslanze zur elektrooptischen Entfernungsmesseinrichtung geführt werden, beispielsweise entlang oder sogar innerhalb einer Umhüllung des Förderschlauchs. Der Schutzschlauch kann aus Kunststoff oder auch Metall hergestellt sein.

Vorteilhafterweise ist die elektrooptische Entfernungsmesseinrichtung durch eine Laserentfernungsmesseinrichtung gebildet. Solche Laserentfernungsmesseinrichtungen sind relativ billig und in geringer Baugröße erhältlich.

Gemäß einem weiteren Merkmal der Erfindung ist die Steuereinrichtung zur Deaktivierung der Förderung des Sandes ausgebildet, sobald die elektrooptische Entfernungsmesseinrichtung einen vorgegebenen maximalen Füllstand des Sandes im Behälter misst. Auf diese Weise kann eine automatische Abschaltung der Befüllung erfolgen, ohne dass der Füllstand angezeigt oder ausgegeben werden muss.

Vorteilhafterweise ist die Steuereinrichtung zur verzögerten Deaktivierung der Förderung des Sandes über eine vorgegebene Zeitdauer ausgebildet. Dadurch kann der Förderschlauch von Sand freigeblasen und verhindert werden, dass beim Herausziehen des Förderschlauchs aus der Öffnung des zu befüllenden Behälters Sand aus dem Förderschlauch rieselt und zu Verschmutzungen und Staubbildung führt. Durch eine derartige zeitgesteuerte Nachblasfunktion nach Beendigung des Befüllvorgangs, welche beispielsweise über einige Sekunden aufrechterhalten wird, kann der Förderschlauch somit von Resten des Sandes freigehalten werden.

Zum Zwecke einer drahtlosen Verbindung der Befüllvorrichtung mit der Messeinrichtung kann die Steuereinrichtung mit einem Transceiver (Sender/Empfänger) zur drahtlosen Verbindung mit der Messeinrichtung zur Erfassung des Füllstands des Sandes im Behälter verbunden sein. Somit erfolgt ein Datenaustausch zwischen dem Behälter für den Sand, der zum Beispiel in einem Schienenfahrzeug angeordnet ist, und der Befüllvorrichtung. Dadurch kann der Befüllvorrichtung oder einer übergeordneten Zentrale mitgeteilt werden, wann eine Befüllung des Behälters notwendig ist. Dadurch kann die Planung einer Wartung beispielsweise des Schienenfahrzeugs unterstützt werden. In der Folge können die Zeiten, während der beispielsweise Schienenfahrzeuge aufgrund der Wartung und Befüllung der Behälter mit Sand nicht zur Verfügung stehen, reduziert werden.

Wenn eine mit der Steuereinrichtung verbundene Anzeige zur Darstellung des Füllstands des Sandes im Behälter vorgesehen ist, kann dem Bedienungspersonal der Befüllvorrichtung entsprechende Information über den Füllstand mitgeteilt werden. Eine Anzeige kann beispielsweise in Form dreier unterschiedlich gefärbter Lichtelemente oder in Form eines Bildschirms zur Darstellung eines Zahlenwerts ausgebildet sein. Die Anzeige kann auch an einer übergeordneten Stelle, beispielsweise einer Wartungszentrale angeordnet sein und muss nicht zwingend an der Befüllvorrichtung selbst montiert sein.

Weiters kann in der Fördereinrichtung ein Sensor zur Erfassung der Strömung des Sandes vorgesehen und mit der Steuereinrichtung verbunden sein. Dadurch kann eine Überwachung der Strömung des Sandes während der Förderung durchgeführt werden und es können beispielsweise Blockaden automatisch festgestellt werden und zur Ausgabe einer optischen oder akustischen Meldung oder auch zur automatischen Abschaltung der Förderung führen. Wenn bereits nach Aktivierung der Förderung keine Strömung von Sand festgestellt wird, kann dies auch ein Indiz dafür sein, dass im Vorratsbehälter kein Sand mehr vorhanden ist oder eine Verstopfung in der Förderleitung aufgetreten ist. Beim laufenden Befüllvorgang sind Schwankungen des Strömungssensors ein Indiz für Schwankungen oder auch für Unterbrechungen der Förderung des Sandes.

Die Absaug- und Entstaubungseinrichtung weist vorzugsweise einen Filter und einen Staubsammelbehälter auf. Durch Komponenten in der Absaug- und Entstaubungseinrichtung wird ein Austritt des Staubs, der bei der Befüllung möglicherweise auftritt, in die Atmosphäre weitestgehend verhindert. Je nach verwendetem Sand und auftretendem Staub werden entsprechende geeignete Filter, beispielsweise Mikrofeinstfilter, eingesetzt. Das Filtersystem kann über eine automatische Filterreinigungsfunktion verfügen, die einen störungsfreien Betrieb der Absaug- und Entstaubungseinrichtung und somit der gesamten Befüllvorrichtung ermöglicht.

An der Ausblaslanze kann ein Betätigungselement, vorzugsweise ein Ein-/Aus-Schalter, angeordnet sein, welches Betätigunsgelement mit der Steuereinrichtung verbunden ist. Über das Betätigungselement kann somit das Bedienungspersonal eine Steuerung des Befüllvorgangs auch in einer gewissen Entfernung von der Befüllvorrichtung vornehmen.

Vorzugsweise weist die Fördereinrichtung einen Injektor mit mehreren Bohrungen für die Druckluft auf. Durch die speziell ausgebildete Fördereinrichtung in Form eines sogenannten Treibstrahlinjektors mit mehreren Bohrungen für die Druckluft zur Förderung des Sandes kann eine einfache, energieeffiziente und gleichmäßige Förderung des Sandes durch den Förderschlauch auch über größere Förderlängen und bei Höhenunterschieden erzielt werden. Vorzugsweise weist der Injektor zumindest fünf Bohrungen auf, wobei vorzugsweise eine Bohrung im Injektor zentral verlaufend und die weiteren Bohrungen kreisförmig um die zentrale Bohrung angeordnet sind. Die um die zentrale Bohrung angeordneten Bohrungen können konisch nach außen verlaufend angeordnet sein.

Die vorliegende Erfindung wird anhand der beigefügten Zeichnungen näher erläutert. Darin zeigen:
- Fig. 1: eine schematische Ansicht einer Vorrichtung zur Befüllung eines Behälters mit Sand mit einer elektrooptischen Entfernungsmesseinrichtung zur Messung des Füllstands des Sandes im Behälter während des Befüllvorgangs;
- Fig. 2: eine Detailansicht der Befüllvorrichtung im zu befüllenden Behälter für den Sand;
- Fig. 3: ein Detail einer als Injektor ausgebildeten Einrichtung zur pneumatischen Förderung des Sandes; und
- Fig. 4: die zeitlichen Verläufe des Füllstands im zu befüllenden Behälter und der Druckluft zum Betreiben einer Fördereinrichtung der Befüllvorrichtung während der Befüllung mit Sand.

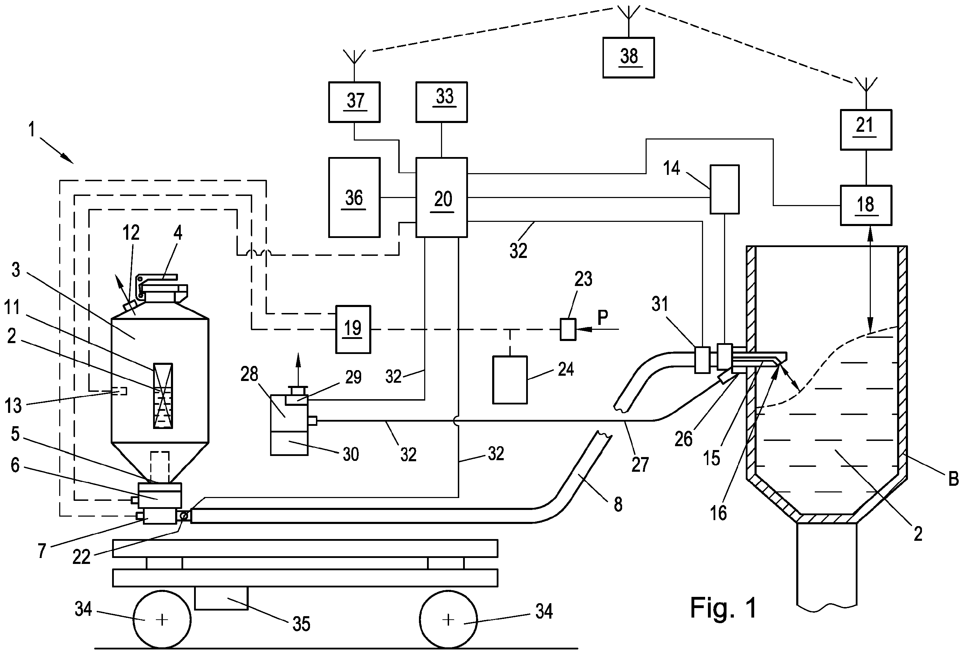

In Fig. 1 ist eine Vorrichtung 1 zur Befüllung eines Behälters B mit Sand 2 mit einer elektrooptischen Entfernungsmesseinrichtung 14 zur Messung des Füllstands V des Sandes 2 im Behälter B während des Befüllvorgangs schematisch dargestellt. Die Vorrichtung 1 weist einen Vorratsbehälter 3 für den Sand 2 mit einem verschließbaren Deckel 4, vorzugsweise an der oberen Seite, auf. An der unteren Seite des Vorratsbehälters 3 ist ein Auslass 5 angeordnet, über den der Sand 2 in die darunter angeordnete Dosiereinrichtung 6 gelangt. Der Vorratsbehälter 3 ist bei der vorliegenden Konstruktion der Befüllvorrichtung 1 nicht als Druckbehälter ausgeführt, weshalb dieser aus Leichtmetall, beispielsweise Aluminium oder einer Aluminiumlegierung, oder sogar Kunststoff gebildet sein kann und ein relativ geringes Gewicht aufweist. Der Vorratsbehälter 3 ist vorzugsweise im Wesentlichen zylinderförmig und zum Auslass 5 hin kegelförmig zusammenlaufend ausgebildet. Über ein allfälliges im Vorratsbehälter 3 befindliches Sichtglas 11 kann eine visuelle Kontrolle des Füllstands V' des Sandes 2 im Vorratsbehälter 3 vorgenommen werden. Alternativ oder zusätzlich können auch Sensoren 13 zur Erfassung des Füllstands V' des 2 im Vorratsbehälter 3 angeordnet werden. Derartige Sensoren 13 können verschiedenartig realisiert sein, beispielsweise als kapazitive oder optische Sensoren. Der Füllstand V' kann als Prozentangabe des Volumens des Vorratsbehälters 3, als Höhe der Befüllung des Vorratsbehälters 3 mit dem Sand 2, als Volumen des im Vorratsbehälters 3 vorhandenen Sandes 2 oder auch als Gewicht des im Vorratsbehälter 3 befindlichen Sand 2 angegeben werden.

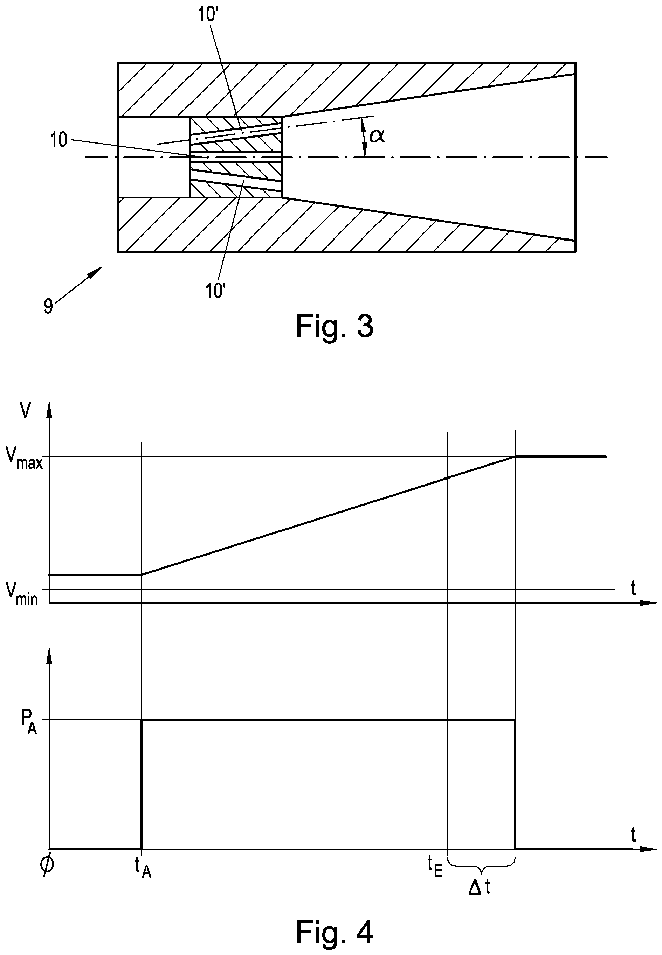

Vorzugsweise unterhalb der Dosiereinrichtung 6 ist eine pneumatische Fördereinrichtung 7 zum Fördern des Sandes 2 angeordnet, welche beispielsweise in Form eines Injektors 9 mit mehreren Bohrungen 10, 10' für die Druckluft P ausgebildet sein kann (siehe Fig. 3). Vorzugsweise an der oberen Seite des Vorratsbehälters 3 kann ein Druckentlastungsventil 12 angeordnet sein, über das Überdruck, insbesondere beim Befüllen des Vorratsbehälters 3, entweichen kann. Die Druckluft P wird über einen Druckluftanschluss 23 oder einen eigenen Kompressor 24 bereitgestellt und über einen Druckregler 19 an die verschiedenen Stellen, insbesondere die pneumatische Fördereinrichtung 7 und allenfalls pneumatisch ausgebildete Dosiereinrichtung 6, geführt. Über den Druckregler 19 kann auf sehr einfache Art Einfluss auf die Auslaufmenge des Sandes 2 über den Auslass 5 im Vorratsbehälter 3 genommen werden.

Am Ausgang der pneumatischen Fördereinrichtung 7 ist der Förderschlauch 8 angeschlossen, über den der Sand 2 im Wesentlichen schwebend durch den Förderschlauch 8 transportiert wird. Am freien Ende des Förderschlauchs 8 ist eine Ausblaslanze 25 angeordnet, die das Verbindungsstück zum Befüllstutzen des zu befüllenden Behälters B, beispielsweise in einem Fahrzeug, insbesondere Schienenfahrzeug, darstellt. Die Ausblaslanze 25 ist bevorzugt als dickwandiges Edelstahlrohr ausgeführt und in einer entsprechenden vom jeweiligen Fahrzeugtyp abhängigen Länge vorgesehen. In der pneumatischen Fördereinrichtung 7 kann ein Sensor 22 zur Messung der Strömung des Sandes 2 angeordnet sein, der wichtige Informationen über allfällige Blockaden oder eine unregelmäßige Förderung des Sandes 2 liefern kann.

Zur Steuerung des Befüllvorgangs ist eine Steuereinrichtung 20 vorgesehen, welche mit den wichtigsten Komponenten der Befüllvorrichtung 1, insbesondere dem Sensor 22 zur Erfassung der Strömung des Sandes 2, oder einem vorzugsweise am Ende des Förderschlauchs 8 oder der Ausblaslanze 25 angeordneten Betätigungselement 31 verbunden ist. Die Steuereinrichtung 20 wird über eine entsprechende elektrische Leitung 32 mit elektrischer Energie versorgt. Alternativ dazu oder auch zusätzlich kann ein Energiespeicher 36, insbesondere ein Akkumulator, vorgesehen sein, der für die Dauer des Befüllvorgangs für die Versorgung der elektrischen Komponenten mit elektrischer Energie sorgt.

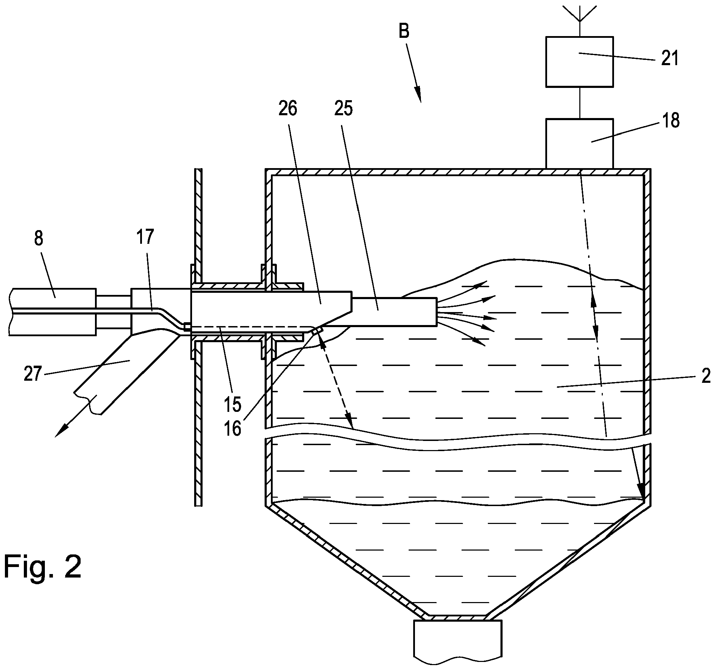

Erfindungsgemäß ist eine elektrooptische Entfernungsmesseinrichtung 14 mit einem Lichtleiter 15 zur Messung des Füllstands V des Sandes 2 im Behälter B während des Befüllvorgangs vorgesehen, wobei das freie Ende 16 des Lichtleiters 15 im Bereich der Ausblaslanze 25 angeordnet ist. Die elektrooptische Entfernungsmesseinrichtung 14, welche beispielsweise durch eine Laserentfernungsmesseinrichtung gebildet sein kann, ist mit der Steuereinrichtung 20 verbunden. Der Lichtleiter 15 kann in einem Schutzschlauch 17 angeordnet sein (siehe Fig. 2). Detektiert die elektrooptische Entfernungsmesseinrichtung 14 einen vorgegebenen maximalen Füllstand Vₘₐₓ des Sandes 2 im Behälter B, kann die Steuereinrichtung 20 die Förderung des Sandes 2 deaktivieren, allenfalls mit einer Nachblasfunktion (siehe Fig. 4). Zusätzlich kann am Behälter B eine weitere Messeinrichtung 18 zur Erfassung des Füllstands V des Sandes 2 im Behälter B angeordnet sein, welche auch außerhalb der Befüllvorgänge eine Aussage über den momentanen Füllstand V im Behälter B treffen kann (siehe auch Fig. 2).

An der Ausblaslanze 25 ist vorzugsweise eine Absaugdüse 26 angeordnet, welche in Längsrichtung der Ausblaslanze 25 vorzugsweise verschiebbar und fixierbar ist, sodass eine entsprechende Anpassung an die jeweiligen baulichen Gegebenheiten erfolgen kann. Über die Absaugdüse 26 wird allenfalls entstehender Staub während des Befüllvorgangs abgesaugt und entlang eines Absaugschlauchs 27 in einer Absaug- und Entstaubungseinrichtung 28, vorzugsweise mit einem Filter 29 und einem Staubsammelbehälter 30, gesammelt. Dadurch kann eine Verschmutzung verhindert oder zumindest reduziert werden und eine Gefährdung des Personals durch den Staub vermieden werden.

Wenn sämtliche Komponenten der Befüllvorrichtung 1 auf einer geeigneten Trägerplattform angeordnet und daran Räder 34 oder dergleichen vorgesehen sind, kann die Befüllvorrichtung 1 einfach zu dem zu befüllenden Behälter 3 bewegt werden, wodurch kürzere Förderwege resultieren und in der Folge die Energiekosten gesenkt werden können. Wenn zumindest ein Rad 34 mit einem entsprechenden Antrieb 35 verbunden ist, kann die Bewegung der Befüllvorrichtung 1 erleichtert werden.

Fig. 2 zeigt eine Detailansicht der Befüllvorrichtung 1 im zu befüllenden Behälter B für den Sand 2. Die Ausblaslanze 25 am freien Ende des Förderschlauchs 8 wird während des Befüllvorgangs in eine Befüllöffnung im Behälter B eingesteckt. Eine Absaugdüse 26 ist koaxial um die Ausblaslanze 25 angeordnet und über einen Absaugschlauch 27 mit einer Absaug- und Entstaubungseinrichtung 28, vorzugsweise mit einem Filter 29 und einem Staubsammelbehälter 30, verbunden (siehe Fig. 1). Im dargestellten Ausführungsbeispiel ist die Absaugdüse 26 mantelförmig um der Ausblaslanze 25 angeordnet, sodass sich dazwischen ein Ringspalt bildet, über den der beim Befüllvorgang entstehende Staub abgesaugt wird. Der Lichtleiter 15 der elektrooptischen Entfernungsmesseinrichtung 14 ist an der Absaugdüse 26 angeordnet und geeignet orientiert, sodass der Füllstand V des Sandes 2 im Behälter B während des Befüllvorgangs erfasst werden kann. Durch die Absaugung des Staubs wird gewährleistet, dass das freie Ende des Lichtleiters 15 sauber bleibt und eine verlässliche Entfernungsmessung zur Ermittlung des Füllstands V zulässt. Der Lichtleiter 15 wird in einem Schutzschlauch 17 zur elektrooptischen Entfernungsmesseinrichtung 14 geführt, beispielsweise entlang oder in einer Umhüllung (nicht dargestellt) des Förderschlauchs 8. Ist ein bestimmter vorgegebener maximaler Füllstand Vₘₐₓ erreicht, welcher beispielsweise 80% des Volumens im Behälter beträgt, erfolgt eine entsprechende Meldung an die Steuereinrichtung 20, welche die Förderung des Sandes 2 stoppt oder nach einer eingestellten Zeitdauer Δt stoppt.

Zusätzlich kann am Behälter B eine weitere Messeinrichtung 18 zur Erfassung des Füllstands V des Sandes 2 im Behälter B angeordnet sein, welche auch außerhalb der Befüllvorgänge eine Aussage über den momentanen Füllstand V im Behälter B treffen und mittels eines Senders 21 an übergeordnete Zentralen 38 weiterleiten kann.

Fig. 3 zeigt ein Detail einer als Injektor 9 ausgebildeten pneumatischen Fördereinrichtung 7 in vergrößerter Darstellung. Der Injektor 9 weist mehrere, vorzugsweise mindestens 5, Bohrungen 10, 10' auf, wobei eine Bohrung 10 zentral verlaufend und die weiteren Bohrungen 10' kreisförmig um die zentrale Bohrung 10, vorzugsweise in gleichen Winkelabständen zueinander, angeordnet sind. Die äußeren um die zentrale Bohrung 10 angeordneten Bohrungen 10' können konisch nach außen verlaufend angeordnet sein, beispielsweise in einem Winkel α zwischen 2,5 und 7,5 Grad. Diese Konstruktion einer sogenannten Treibstrahldüse gewährleistet eine optimale Förderung des Sandes 2 im Förderschlauch 8 mit einem optimalen Strömungsprofil der Druckluft P im Ausgang des Injektors 9 und ermöglicht dadurch eine quasi schwebende Beförderung des Sandes 2 innerhalb des Förderschlauchs 8 zum zu befüllenden Behälter B.

Schließlich zeigt Fig. 4 die zeitlichen Verläufe des Füllstands V des Sandes 2 im zu befüllenden Behälter B und der Druckluft P zum Betreiben der pneumatischen Fördereinrichtung 7 der Befüllvorrichtung 1 während des Befüllvorgangs. Zum Zeitpunkt t_{A} wird die pneumatische Fördereinrichtung 7 aktiviert, indem die Druckluft P mit einem Arbeitsdruck P_{A} an die pneumatische Fördereinrichtung 7 angelegt wird. Der Füllstand V bzw. das Volumen an Sand 2 im Behälter B steigt mit der Zeit t von einem gewissen restlichen im Behälter B befindlichen Füllstand V, welcher über einem minimalen Füllstand Vₘᵢₙ liegt, im Wesentlichen linear an. Wird nun mit der erfindungsgemäßen optoelektronischen Entfernungsmesseinrichtung 14 ein vorgegebener maximaler Füllstand Vₘₐₓ an Sand 2 im Behälter B detektiert, erfolgt zum Zeitpunkt t_{E} eine Beendigung der Förderung des Sandes 2 und eine Abschaltung der Druckluft P. Gemäß einem bevorzugten Ausführungsbeispiel wird die pneumatische Fördereinrichtung 7 aber über eine voreinstellbare Zeitdauer Δt weiterbetrieben, also weiter Druckluft P in die pneumatische Fördereinrichtung 7 geblasen, wodurch die Fördereinrichtung 7 und der Förderschlauch 8 von Sand 2 freigeblasen werden kann. Je nach Länge des Förderschlauchs 8 kann die Zeitdauer Δt der Nachblasfunktion beispielsweise zwischen 3 und 10 Sekunden betragen. Anstelle einer voreingestellten Zeitdauer Δt kann auch mithilfe geeignet angeordneter Sensoren das Ende des Strömens von Sand 2 durch den Förderschlauch 8 erfasst werden und danach die Pressluft P abgeschaltet werden. Zum Zeitpunkt t_{E} + Δt wird die Druckluft P deaktiviert und somit die Förderung des Sandes 2 abgeschaltet.

Durch das Zusammenwirken der elektrooptischen Entfernungsmesseinrichtung 14 mit der Steuereinrichtung 20 kann eine zuverlässige automatische Abschaltung der Befüllvorrichtung 1 gewährleistet und eine rasche, staubfreie Befüllung des Behälters B mit Sand 2 erzielt werden. Durch eine zusätzliche Messeinrichtung 18 zur Erfassung des Füllstands V des Sandes 2 im Behälter B, einen Sensor zur Erfassung des Füllstands V' des Sandes 2 im Vorratsbehälter 3 und deren Verbindung, beispielsweise über eine Zentrale 38 kann darüber hinaus sichergestellt werden, dass der Vorratsbehälter 3 rechtzeitig mit Sand 2 befüllt wird und jeder Behälter B immer mit einer ausreichenden Menge an Sand 2 befüllt ist, welche beispielsweise für eine Fahrt eines Schienenfahrzeuges entlang einer geplanten Strecke unbedingt erforderlich ist.

## Patentansprüche

1. Vorrichtung (1) zum Befüllen eines Behälters (B) mit Sand (2) zur Verwendung für Besandungssysteme zur Unterstützung der Brems- und Antriebstechnik von Schienenfahrzeugen, mit einem Vorratsbehälter (3) für den Sand (2) mit einem verschließbaren Deckel (4) und einem Auslass (5), einer unter dem Vorratsbehälter (3) angeordneten Dosiereinrichtung (6), einer pneumatischen Fördereinrichtung (7) zum Fördern des Sandes (2) mit Hilfe von Druckluft (P) in den zu befüllenden Behälter (B) über einen Förderschlauch (8) mit einer Ausblaslanze (25) am freien Ende, wobei eine Steuereinrichtung (20) zur Steuerung des Befüllvorgangs vorgesehen ist, und an der Ausblaslanze (25) eine Absaugdüse (26) angeordnet ist, wobei die Absaugdüse (26) über einen Absaugschlauch (27) mit einer Absaug- und Entstaubungseinrichtung (28) mit einem Filter (29) und einem Staubsammelbehälter (30) verbunden ist, **dadurch gekennzeichnet, dass** eine mit der Steuereinrichtung (20) verbundene elektrooptische Entfernungsmesseinrichtung (14) mit einem Lichtleiter (15) zur Messung des Füllstands (V) des Sandes (2) im Behälter (B) während des Befüllvorgangs vorgesehen ist, weiters die Steuereinrichtung (20) mit einer Messeinrichtung (18) zur Erfassung des Füllstands (V) des Sandes (2) im Behälter (B) und mit einem Sensor (13) im Vorratsbehälter (3) zur Erfassung des Füllstands (V') des Sandes (2) im Vorratsbehälter (3) verbunden ist, welche Messeinrichtung (18) und welcher Sensor (13) mit einer übergeordneten Zentrale (38) verbunden ist, und die Absaugdüse (26) koaxial um die Ausblaslanze (25) angeordnet ist, wobei das freie Ende (16) des Lichtleiters (15) der elektrooptischen Entfernungsmesseinrichtung (14) im Bereich der Ausblaslanze (25) an der Absaugdüse (26) angeordnet ist.

2. Befüllvorrichtung (1) nach Anspruch 1, **dadurch gekennzeichnet, dass** der Lichtleiter (15) in einem Schutzschlauch (17) angeordnet ist.

3. Befüllvorrichtung (1) nach Anspruch 1 oder 2, **dadurch gekennzeichnet, dass** die elektrooptische Entfernungsmesseinrichtung (14) durch eine Laserentfernungsmesseinrichtung gebildet ist.

4. Befüllvorrichtung (1) nach einem der Ansprüche 1 bis 3, **dadurch gekennzeichnet, dass** die Steuereinrichtung (20) zur Deaktivierung der Förderung des Sandes (2) ausgebildet ist, sobald die elektrooptische Entfernungsmesseinrichtung (14) einen vorgegebenen maximalen Füllstand (Vₘₐₓ) des Sandes (2) im Behälter (B) misst.

5. Befüllvorrichtung (1) nach Anspruch 4, **dadurch gekennzeichnet, dass** die Steuereinrichtung (20) zur verzögerten Deaktivierung der Förderung des Sandes (2) über eine vorgegebene Zeitdauer (Δt) ausgebildet ist.

6. Befüllvorrichtung (1) nach einem der Ansprüche 1 bis 5, **dadurch gekennzeichnet, dass** die Steuereinrichtung (20) mit einem Transceiver (37) zur drahtlosen Verbindung mit der Messeinrichtung (18) zur Erfassung des Füllstands (V) des Sandes (2) im Behälter (B) verbunden ist.

7. Befüllvorrichtung (1) nach einem der Ansprüche 1 bis 6, **dadurch gekennzeichnet, dass** eine mit der Steuereinrichtung (20) verbundene Anzeige (33) zur Darstellung des Füllstands (V) des Sandes (2) im Behälter (B) vorgesehen ist.

8. Befüllvorrichtung (1) nach einem der Ansprüche 1 bis 7, **dadurch gekennzeichnet, dass** in der Fördereinrichtung (7) ein Sensor (22) zur Erfassung der Strömung des Sandes (2) vorgesehen und mit der Steuereinrichtung (20) verbunden ist.

9. Befüllvorrichtung (1) nach einem der Ansprüche 1 bis 8, **dadurch gekennzeichnet, dass** an der Ausblaslanze (25) ein Betätigungselement (31) angeordnet ist, welches Betätigunsgelement (31) mit der Steuereinrichtung (20) verbunden ist.

10. Befüllvorrichtung (1) nach einem der Ansprüche 1 bis 9, **dadurch gekennzeichnet, dass** die Fördereinrichtung (7) einen Injektor (9) mit mehreren Bohrungen (10, 10') für die Druckluft (P) aufweist, wobei vorzugsweise eine Bohrung (10) im Injektor (9) zentral verlaufend angeordnet ist, und die weiteren Bohrungen (10') kreisförmig um die zentrale Bohrung (10), vorzugsweise in gleichen Winkelabständen zueinander, angeordnet sind.

## Claims

1. An apparatus (1) for filling a container (B) with sand (2), for use in sanding systems to support the braking and drive technology of rail vehicles, having a storage container (3) for the sand (2) with a closable lid (4) and an outlet (5), a metering device (6) arranged below the storage container (3), a pneumatic conveying device (7) for conveying the sand (2) with the aid of compressed air (P) into the container (B) to be filled via a conveying hose (8) with a blow-out lance (25) at the free end, wherein a control device (20) for controlling the filling process is provided, and a suction-removal nozzle (26) is arranged on the blow-out lance (25), wherein the suction-removal nozzle (26) is connected via a suction hose (27) to a suction and dedusting device (28) with a filter (29) and a dust collecting container (30), **characterised in that** an electro-optical distance-measuring device (14) which is connected to the control device (20) is arranged with a light guide (15) for measuring the filling level (V) of the sand (2) in the container (B) during the filling process, furthermore the control device (20) is connected to a measuring device (18) for detecting the filling level (V) of the sand (2) in the container (B) and to a sensor (13) in the storage container (3) for detecting the filling level (V') of the sand (2) in the storage container (3), which measuring device (18) and which sensor (13) are connected to a superordinate control exchange centre (38), and the suction-removal nozzle (26) is arranged coaxially around the blow-out lance (25), wherein the free end (16) of the light guide (15) of the electro-optical distance measuring device (14) is arranged at the region of the blow-out lance (25) on the suction-removal nozzle (26).

2. The filling apparatus (1) according to claim 1, **characterised in that** the light guide (15) is arranged in a protective tube (17) .

3. The filling apparatus (1) according to claim 1 or 2, **characterised in that** the electro-optical distance measuring device (14) is formed by a laser distance measuring device.

4. The filling apparatus (1) according to any of claims 1 to 3, **characterised in that** the control device (20) is designed to deactivate the conveyance of the sand (2) as soon as the electro-optical distance measuring device (14) measures a predetermined maximum filling level (Vₘₐₓ) of the sand (2) in the container (B).

5. The filling apparatus (1) according to claim 4, **characterised in that** the control device (20) is designed for delayed deactivation of the conveyance of the sand (2) over a predetermined duration (Δt).

6. The filling apparatus (1) according to any of Claims 1 to 5, **characterised in that** the control device (20) is connected to a transceiver (37) for wireless connection to the measuring device (18) for detecting the filling level (V) of the sand (2) in the container (B).

7. The filling apparatus (1) according to any of claims 1 to 6, **characterised in that** a display (33) connected to the control device (20) is provided for depicting the filling level (V) of the sand (2) in the container (B).

8. The filling apparatus (1) according to any of claims 1 to 7, **characterised in that** a sensor (22) is provided in the conveying device (7) for detecting the flow of the sand (2) and is connected to the control device (20).

9. The filling apparatus (1) according to any of claims 1 to 8, **characterised in that** an actuating element (31) is arranged on the blow-out lance (25), which actuating element (31) is connected to the control device (20).

10. The filling apparatus (1) according to any of claims 1 to 9, **characterised in that** the conveying device (7) comprises an injector (9) with a plurality of bores (10, 10') for the compressed air (P), wherein preferably a bore (10) is arranged centrally in the injector (9), and the other bores (10') are arranged in a circle around the central bore (10), preferably at equal angular distances from one another.

## Revendications

1. Dispositif (1) pour remplir un récipient (B) avec du sable (2) à utiliser pour un système de sablage pour assister la technique de freinage et d'entraînement de véhicules ferroviaires, avec un réservoir (3) pour le sable (2) avec un couvercle (3) verrouillable et une sortie (5), un dispositif de dosage (6) disposé sous le réservoir (3), un dispositif de transport pneumatique (7) pour transporter le sable (2) à l'aide d'air comprimé (P) vers le récipient (B) à remplir par un flexible de transport (8) avec une lance de soufflage (25) au niveau de l'extrémité libre, un dispositif de commande (20) pour commander le processus de remplissage étant prévu, et une buse d'aspiration (26) étant disposée au niveau de la lance de soufflage (25), la buse d'aspiration (26) étant reliée par un flexible d'aspiration (27) à un dispositif d'aspiration et de dépoussiérage (28) avec un filtre (29) et un réservoir collecteur des poussières (30), **caractérisé en ce qu'**un dispositif électro-optique de mesure de la distance (14) relié au dispositif de commande (20) est prévu avec un conducteur optique (15) pour mesurer le niveau de remplissage (V) en sable (2) dans le récipient (B) pendant le processus de remplissage, en outre **en ce que** le dispositif de commande (20) est relié à un dispositif de mesure (18) pour détecter le niveau de remplissage (V) en sable (2) dans le récipient (B) et à un capteur (13) dans le réservoir (3) pour détecter le niveau de remplissage (V') en sable (2) dans le réservoir (3), ledit dispositif de mesure (18) et ledit capteur (13) étant reliés à une centrale supérieure (38), et la buse d'aspiration (26) est disposée de manière coaxiale autour de la lance de soufflage (25), l'extrémité libre (16) du conducteur optique (15) du dispositif électro-optique de mesure de distance (14) étant disposé dans la zone de la lance de soufflage (25) au niveau de la buse d'aspiration (26).

2. Dispositif de remplissage (1) selon la revendication 1, **caractérisé en ce que** le conducteur optique (15) est disposé dans un tuyau flexible de protection (17).

3. Dispositif de remplissage (1) selon l'une quelconque des revendications 1 ou 2, **caractérisé en ce que** le dispositif électro-optique de mesure de la distance (14) est formé par un dispositif de mesure de la distance à laser.

4. Dispositif de remplissage (1) selon l'une quelconque des revendications 1 à 3, **caractérisé en ce que** le dispositif de commande (20) est formé pour désactiver le transport du sable (2) dès que le dispositif électro-optique de mesure de la distance (14) mesure un niveau de remplissage maximal (Vₘₐₓ) prédéfini en sable (2) dans le récipient (B).

5. Dispositif de remplissage (1) selon la revendication 4, **caractérisé en ce que** le dispositif de commande (20) est formé pour la désactivation retardée du transport du sable (2) sur une durée (Δt) prédéfinie.

6. Dispositif de remplissage (1) selon l'une quelconque des revendications 1 à 5, **caractérisé en ce que** le dispositif de commande (20) est relié à un récepteur-émetteur (37) pour la connexion sans fil au dispositif de mesure (18) pour détecter le niveau de remplissage (V) en sable (2) dans le récipient (B).

7. Dispositif de remplissage (1) selon l'une quelconque des revendications 1 à 6, **caractérisé en ce qu'**un affichage (33) relié au dispositif de commande (20) est prévu pour représenter le niveau de remplissage (V) en sable (2) dans le récipient (B).

8. Dispositif de remplissage (1) selon l'une quelconque des revendications 1 à 7, **caractérisé en ce qu'**un capteur (22) est prévu dans le dispositif de transport (7) pour détecter l'écoulement du sable (2) et est relié au dispositif de commande (20).

9. Dispositif de remplissage (1) selon l'une quelconque des revendications 1 à 8, **caractérisé en ce qu'**un élément d'actionnement (31) est disposé au niveau de la lance de soufflage (25), ledit élément d'actionnement (31) étant relié au dispositif de commande (20).

10. Dispositif de remplissage (1) selon l'une quelconque des revendications 1 à 9, **caractérisé en ce que** le dispositif de transport (7) présente un injecteur (9) avec plusieurs perçages (10, 10') pour l'air comprimé (P), un alésage (10) étant disposé de préférence en s'étendant centralement dans l'injecteur (9), et les autres perçages (10') étant disposés en cercle autour du perçage central (10), de préférence à des distances angulaires égales les uns par rapport aux autres.
